# EUROPÄISCHE PATENTANMELDUNG

(11) **EP 2 933 401 A1**
(43) Veröffentlichungstag der Anmeldung: **21.10.2015**
(21) Anmeldenummer: 15000606.2
(22) Anmeldetag: 03.03.2015
(51) Int. Cl.: E04H 17/10, E04H 17/26, F16G 11/00, B21F 9/00

(54) **Einrichtung zum Spannen von Strangelementen**

(30) Priorität: 22.03.2014 DE 102014004160
(71) Anmelder: CARL STAHL GMBH, 73079 Süßen (DE)
(72) Erfinder: Hokenmaier, Tobias, 73116 Wäschenbeuren (DE)
(74) Vertreter: Bartels & Partner

(57) **Zusammenfassung**

Einrichtung zum Spannen von Strangelementen.

Eine Einrichtung zum Spannen von Strangelementen, insbesondere von Seilen oder Drähten bei netz- oder gitterartigen Umzäunungen, mit einem Gehäuse mit zwei einander gegenüberliegenden Gehäusewänden (45), in denen auf einer gemeinsamen Achse jeweils eine Lagerbohrung (15) für eine für einen Wickelvorgang drehbare Spannwelle (17) gebildet ist, und mit einer die Drehung der Spannwelle (17) in Abwickelrichtung verhindernden Drehsperre (24, 28), ist dadurch gekennzeichnet, dass die Spannwelle (17) ein flanschartig erweitertes Kopfteil (33) aufweist, das mittels eines Haltemittels (41, 43) an der Außenseite der zugeordneten Gehäusewand (45) anliegend gehalten ist, und dass die Drehsperre mindestens einen Sperrkörper (24) aufweist, der in eine im Kopfteil (33) befindliche Aufnahme derart einsetzbar ist, dass er mit einem axial vorstehenden Vorsprung in eine in der Gehäusewand (45) befindliche Ausnehmung (28) zur Bildung einer formschlüssigen Verriegelung eingreift.

## Beschreibung

Die Erfindung betrifft eine Einrichtung zum Spannen von Strangelementen, insbesondere von Seilen oder Drähten bei netz- oder gitterartigen Umzäunungen, mit einem Gehäuse mit zwei einander gegenüberliegenden Gehäusewänden, in denen auf einer gemeinsamen Achse jeweils eine Lagerbohrung für eine für einen Wickelvorgang drehbare Spannwelle gebildet ist, und mit einer die Drehung der Spannwelle in Abwickelrichtung verhindernden Drehsperre.

Spanneinrichtungen dieser Art sind bekannt. Beispielsweise ist in DE 2 010 748 eine Spanneinrichtung dieser Art offenbart, mit der Spanndrähte von Maschendrahtzäunen spannbar sind. Das Dokument DE 3 336 574 A1 offenbart eine gattungsgleiche Spanneinrichtung, mit der bereits vorgespannte Drähte nachgespannt werden können. Bei den bekannten Spanneinrichtungen ist die der Spannwelle zugehörige Drehsperre durch ein durch eine Verzahnung an der Spannwelle gebildetes Klinkenrad gebildet, das mit einer am Gehäuse gelagerten Klinke zusammenwirkt, die durch Eingriff in die Verzahnung des Klinkenrads eine Drehung der Spannwelle in einer Drehrichtung blockiert. Derartige Ausgestaltungen der Drehsperre sind baulich verhältnismäßig aufwendig.

Ausgehend von diesem Stand der Technik stellt sich die Erfindung die Aufgabe, eine Spanneinrichtung zur Verfügung zu stellen, die sich durch eine besonders einfache, kostengünstig herstellbare sowie optisch elegante, kaschierte Bauweise auszeichnet.

Erfindungsgemäß ist diese Aufgabe durch eine Einrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Drehsperre zumindest ein Paar Keilsicherungsscheiben aufweist, das zwischen einem mit der Spannwelle verbundenen Teil und der Gehäusewand angeordnet ist, wobei eine Verschraubung vorgesehen ist, die eine Druckkraft erzeugt, die das Paar der Keilsicherungsscheiben zwischen Gehäusewand und dem mit der Spannwelle verbundenen Teil verpresst.

Für die Ausbildung einer Drehsperre, die besonders einfach aufgebaut, kostengünstig herstellbar und einfach montierbar ist und die sich durch eine besonders kompakte Bauweise auszeichnet, nutzt die Erfindung Keilsicherungsscheiben, wie sie im Stand der Technik als Schraubensicherung verwendet werden und unter der Bezeichnung "Nord-Lock ^{®}"-Sicherungen bekannt sind. Diese Ringscheibenpaare bestehen, wie dies beispielsweise aus dem Dokument GB 2 136 077 A bekannt ist, aus gleichartigen Sicherungsringen, die an einer Seite mehrere in Umfangsrichtung flach ansteigende Keilflächen mit dazwischenliegenden steilen Stirnflächen und an der anderen Seite eine Art Verzahnung, vorzugsweise mit in Radialrichtung verlaufenden feinen Rippen, aufweisen.

Beim Einsatz einer derartigen Nord-Lock^{®}-Sicherung sichert ein Keilsicherungsscheibenpaar eine Schraubverbindung durch Vorspannkraft anstatt durch Reibung. Die Keilsicherungsscheiben haben auf der Innenseite Keilflächen und auf der Außenfläche Radialrippen; dabei ist die Form der Keilflächen derart gewählt, dass der Keilflächenwinkel stets größer ist als die Gewindesteigung der die Nord-Lock^{®}-Sicherung durchgreifenden Festlegeschrauben. Schon bei einer geringen Drehung in Löserichtung erfolgt aufgrund der Keilwirkung eine Erhöhung der Vorspannkraft, die Schraube sichert sich somit selbst gegen ungewolltes Lösen.

In vorteilhafter Weise kann das mit der Spannwelle verbundene Teil durch ein an der Spannwelle selbst befindliches, flanschartiges Kopfteil derselben gebildet sein, wobei das Kopfteil für eine Drehbetätigung der Spannwelle einen Innensechskant oder Außensechskant aufweisen kann.

Für die Gestaltung der die Presskraft für das Paar der Keilsicherungsscheiben erzeugenden Verschraubung kann mit besonderem Vorteil vorgesehen sein, dass das dem Kopfteil gegenüberliegende Ende der Spannwelle zur Bildung der Verschraubung eine koaxiale Bohrung mit Innengewinde aufweist, mit dem eine ein zweites flanschartiges Kopfteil bildende Schraube verschraubbar ist, zwischen deren Kopf und der Außenseite der Gehäusewand ein zweites Paar Keilsicherungsscheiben angeordnet ist. Wie beim Kopfteil der Spannwelle kann das Kopfteil der Schraube einen Innensechskant oder Außensechskant für die Drehbetätigung aufweisen.

Die Montage der Drehsperre gestaltet sich besonders einfach, wenn die Kopfteile von Spannwelle und der zugeordneten Schraube je eine vertiefte Ringnut als Sitz für das zugeordnete Paar der Keilsicherungsscheiben aufweisen, so dass Spannwelle und Schraube mit in der jeweiligen Ringnut platzierten Keilsicherungsscheiben bei der Montage lediglich mit dem Gehäuse zusammengesteckt werden müssen.

Gemäß einem zweiten Aspekt der Erfindung ist die oben gestellte Erfindungsaufgabe auch durch eine Einrichtung gelöst, die die Merkmale des Patentanspruchs 6 aufweist.

Gemäß diesem Aspekt zeichnet sich die Erfindung dadurch aus, dass die Spannwelle ein flanschartig erweitertes Kopfteil aufweist, das mittels eines Haltemittels an der Außenseite der zugeordneten Gehäusewand anliegend gehalten ist, wobei die Drehsperre mindestens einen Sperrkörper aufweist, der in eine Aufnahme im Kopfteil derart einsetzbar ist, dass er einen axial vorstehenden, zur Bildung einer formschlüssigen Verriegelung in eine Ausnehmung der Gehäusewand eingreifenden Vorsprung bildet.

Um eine Verriegelung in mehreren Drehpositionen der Spannwelle zu ermöglichen, können mehrere im Winkel zueinander versetzte Ausnehmungen in der Gehäusewand vorgesehen sein, die auf einer Kreislinie angeordnet sind, die die Lagerbohrung für die Spannwelle konzentrisch umgibt. Um fein abgestufte Drehpositionen für die Spannwelle zu ermöglichen, können zusätzlich oder alternativ hierzu auch am Kopfteil der Spannwelle auf einer zur Achse konzentrischen Kreislinie mehrere Aufnahmen für einen einzusetzenden Sperrkörper vorgesehen sein.

Bezüglich des Haltemittels, das das den Sperrkörper aufnehmende Kopfteil an der Gehäusewand anliegend hält, kann eine Schraube vorgesehen sein, die, in entsprechender Weise wie beim ersten Aspekt der Erfindung, in eine koaxiale Gewindebohrung in dem dem Kopfteil gegenüberliegenden Ende der Spannwelle einschraubbar ist und ein zweites, flanschartig erweitertes Kopfteil bildet, das an der Außenseite der zugeordneten Gehäusewand anliegt und den gleichen Durchmesser wie das Kopfteil der Spannwelle haben kann.

Ungeachtet dessen, ob die Erfindung gemäß dem ersten oder dem zweiten Aspekt ausgebildet ist, kann zum Spannen von Seilen, an denen eine Netz- oder Gitterstruktur einer Umzäunung aufgehängt ist, das Gehäuse der Spanneinrichtung mit besonderem Vorteil durch einen einen Pfosten der Umzäunung bildenden Profilstab gebildet sein.

Besonders vorteilhaft kann dabei das Gehäuse durch einen geschlossenen Rechteckprofilstab gebildet sein. Bei einem durch einen Eckpfosten einer betreffenden Umzäunung gebildeten Gehäuse kann zum Spannen von Seilen in zueinander in einem Winkel verlaufenden Spannrichtungen jeweils ein Paar Lagerbohrungen in einander paarweise gegenüberliegenden Gehäusewänden ausgebildet sein, in denen jeweils eine einer jeweiligen Spannrichtung zugeordnete Spannwelle gelagert ist. Dadurch sind Spannseile für beide sich an das betreffende Eck anschließende Teile der Umzäunung von einem Eckpfosten aus spannbar.

Nachstehend ist die Erfindung anhand der Zeichnung im Einzelnen erläutert. Es zeigen:
- Fig. 1: eine schematisierte perspektivische Darstellung eines Teils einer Umzäunung mit einem Gitternetz, mit horizontalen Spannseilen und mit erfindungsgemäßen Einrichtungen zum Spannen derselben;
- Fig. 2: eine perspektivische Schrägansicht eines Eckpfostens der Umzäunung von Fig. 1;
- Fig. 3: eine näherungsweise in natürlicher Größe einer praktischen Ausführungsform gezeichnete perspektivische Schrägansicht des in Fig. 2 mit III bezeichneten Bereichs;
- Fig. 4: einen Vertikalschnitt des Bereichs von Fig. 3 entsprechend der dort mit IV - IV angegebenen Schnittebene;
- Fig. 5: eine gegenüber einer praktischen Ausführungsform fünffach vergrößert gezeichnete Seitenansicht eines Paares Keilsicherungsscheiben;
- Fig. 6: eine perspektivische Schrägansicht lediglich einer Keilsicherungsscheibe des in Fig. 5 gezeigten Paares;
- Fig. 7: eine gegenüber einer praktischen Ausführungsform etwa in doppelter Größe gezeichnete Seitenansicht einer Spanneinheit des Ausführungsbeispiels der erfindungsgemäßen Einrichtung;
- Fig. 8: eine Schnittdarstellung entsprechend der Schnittlinie VIII - VIII von Fig. 7;
- Fig. 9: eine perspektivische Schrägansicht der Spanneinheit von Fig. 7 und 8;
- Fig. 10: eine abgebrochene Seitenansicht eines Endstabes für das Gitternetz der Umzäunung von Fig. 1;
- Fig. 11: einen der Fig. 4 ähnlichen Vertikalschnitt im Bereich der Spannwelle einer Ausführungsform gemäß einem zweiten Aspekt der Erfindung;
- Fig. 12: eine perspektivische Schrägansicht der Spanneinheit der Ausführungsform von Fig. 11;
- Fig. 13: eine Draufsicht der Spanneinheit von Fig. 12;
- Fig. 14: einen Längsschnitt entsprechend der Schnittlinie XIV - XIV von Fig. 13;
- Fig. 15: eine perspektivische Schrägansicht der Spanneinheit eines abgewandelten Ausführungsbeispiels gemäß dem zweiten Aspekt der Erfindung;
- Fig. 16: eine Draufsicht der Spanneinheit von Fig. 15;
- Fig. 17: einen Längsschnitt entsprechend der Schnittlinie XVII - XVII von Fig. 16;
- Fig. 18: einen der Fig. 11 ähnlichen Vertikalschnitt eines Eckpfostens im Spannwellenbereich für eine weiter abgewandelte Ausführungsform gemäß dem zweiten Aspekt der Erfindung;
- Fig. 19: eine perspektivische Schrägansicht der Spanneinheit für die weitere Ausführungsform gemäß Fig. 18;
- Fig. 20: eine Draufsicht der Spanneinheit von Fig. 19;
- Fig. 21: einen Längsschnitt entsprechend der Schnittlinie XXI - XXI von Fig. 20;
- Fig. 22: eine perspektivische Schrägansicht der Spanneinheit gemäß einem weiter abgewandelten Ausführungsbeispiel;
- Fig. 23: eine Draufsicht der Spanneinheit von Fig. 22;
- Fig. 24: einen Längsschnitt entsprechend der Schnittlinie XXIV - XXIV von Fig. 23;
- Fig. 25: eine Draufsicht der Spanneinheit gemäß einem weiteren Ausführungsbeispiel;
- Fig. 26: einen Längsschnitt der Spanneinheit des Ausführungsbeispiels von Fig. 25;
- Fig. 27: eine Draufsicht der Spanneinheit gemäß einem weiter abgewandelten Ausführungsbeispiel und
- Fig. 28: einen Längsschnitt der Spanneinheit des Ausführungsbeispiels von Fig. 27.

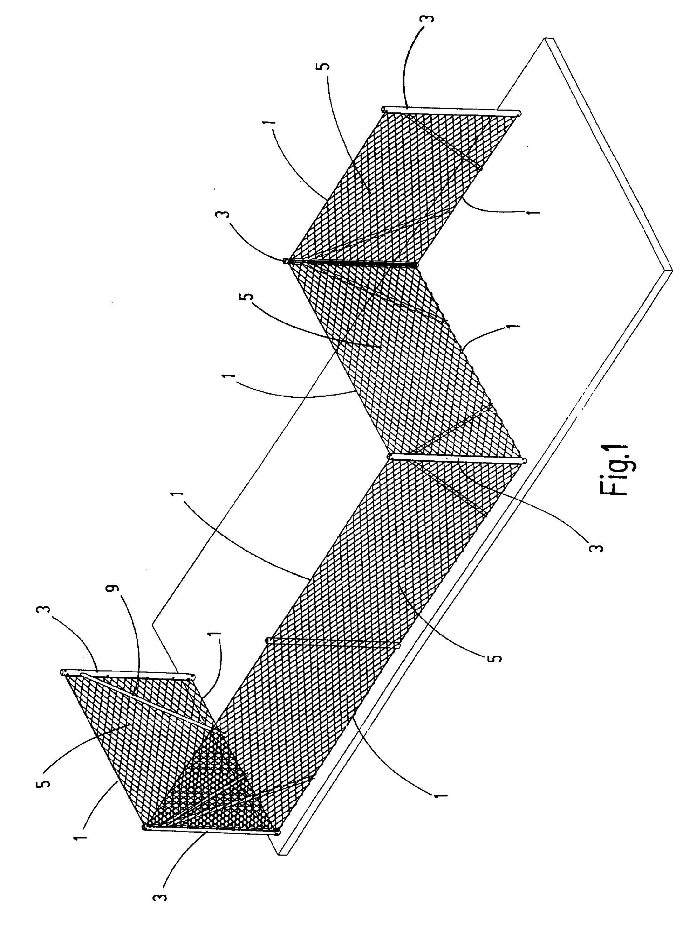

Die Erfindung ist unter Bezugnahme auf die Zeichnungen anhand von Beispielen erläutert, bei denen die Einrichtung zum Spannen horizontaler Spannseile 1 vorgesehen ist, die bei der Umzäunung von Fig. 1 zwischen Eckpfosten 3 zu spannen sind. Zwischen den Eckpfosten 3 weist die Umzäunung ein Gitternetz 5 auf, beispielsweise in Form einer aus Stahlseilen gebildeten Netzanordnung, wie sie beispielsweise in EP 1 536 157 A2 offenbart ist.

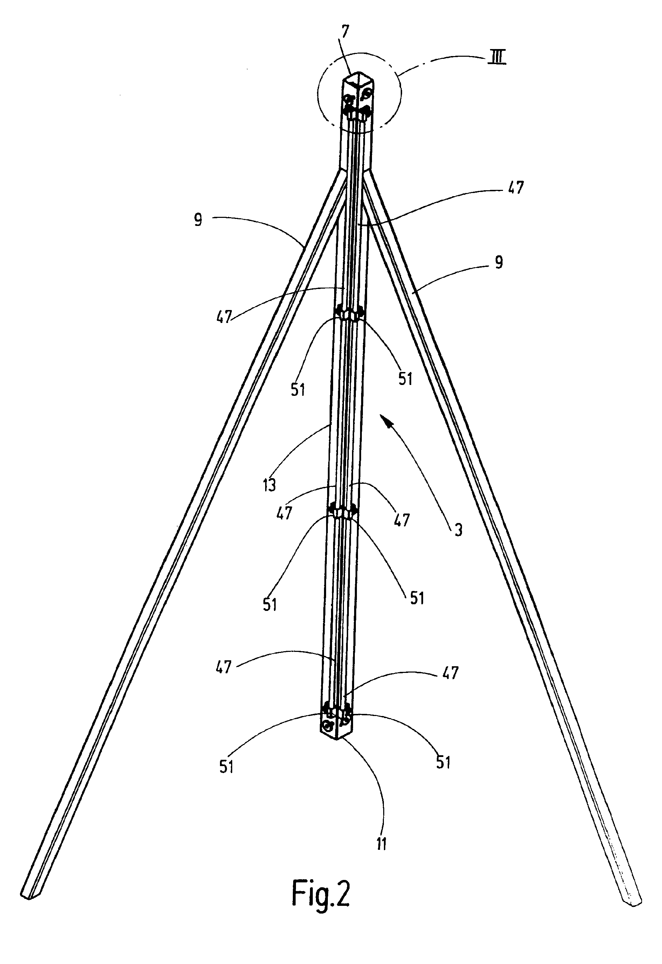

In gesonderter Darstellung zeigt die Fig. 2 einen Eckpfosten 3 der Umzäunung von Fig. 1. In der Nähe des oberen Endes 7 ist der Eckpfosten 3 durch schräg verlaufende Streben 9 am Untergrund abgestützt. Das obere Ende 7 sowie das untere Ende 11 der Eckpfosten 3 der Umzäunung sind jeweils mit Spanneinrichtungen gemäß einem Ausführungsbeispiel der Erfindung versehen.

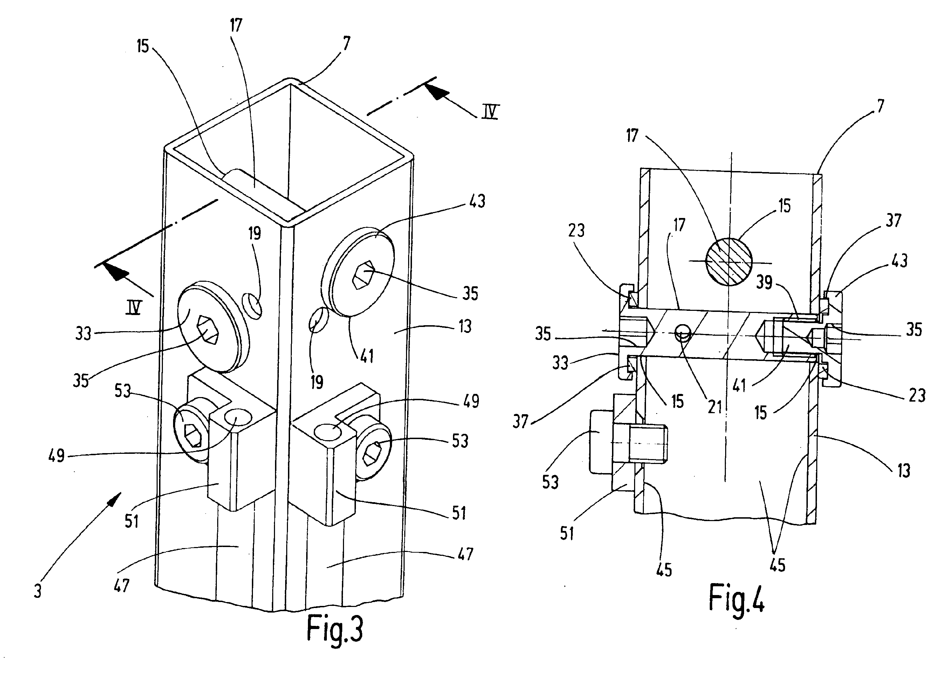

Nähere Einzelheiten eines ersten Ausführungsbeispiels sind aus den Fig. 3 bis 9 zu ersehen. Dabei zeigen Fig. 3 und 4 den Einbau zweier gleichartiger Spanneinrichtungen am oberen Ende 7 des Eckpfostens 3, der aus einem metallischen Profilstab 13 in Form eines geschlossenen Rechteckprofils mit quadratischem Querschnitt gebildet ist. Entsprechend dem abgewinkelten Verlauf der Gitternetze 5 am jeweiligen Eckpfosten 3 sind die Spanneinrichtungen für im rechten Winkel zueinander verlaufende Spannrichtungen ausgebildet. Dementsprechend sind in paarweise jeweils einander gegenüberliegenden Seitenwänden 45 des Profilstabes 13 Lagerbohrungen 15 für jeweils eine Spannwelle 17 ausgebildet. Für den Zulauf des mittels der Spannwelle 17 aufzuwickelnden Spannseiles 1 sind im Profilstab 13 jeweils Zugangsöffnungen 19 vorgesehen, und die Spannwellen 17 weisen eine Bohrung 21 auf, in die das Spannseilende einfädelbar ist.

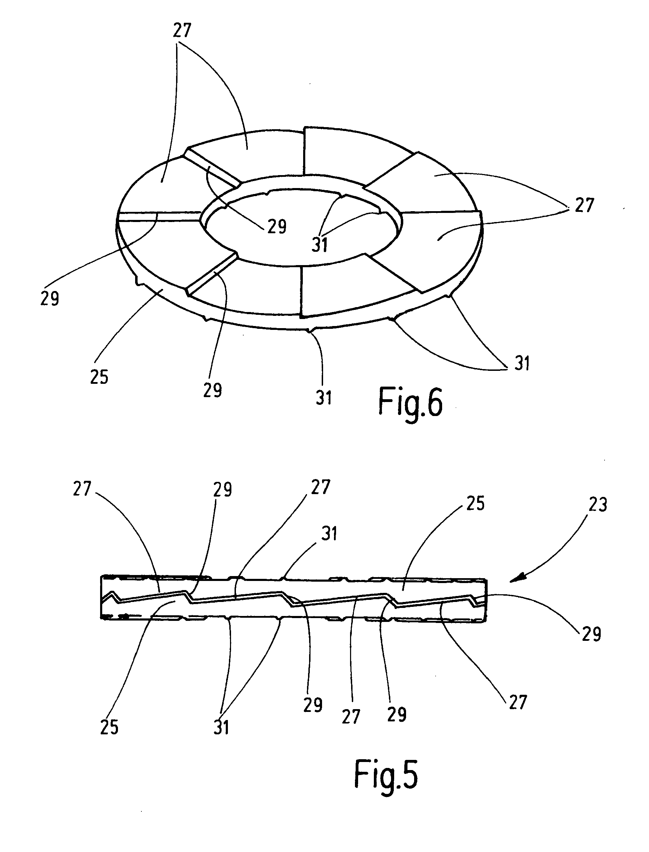

Als Drehsperre, die eine Drehung der jeweiligen Spannwelle 17 in Aufwickel- oder Spannrichtung zulässt und eine Drehbewegung in Abwickelrichtung verhindert, sind beim gezeigten Beispiel zwei Paare von Keilsicherungsscheiben 23 vorgesehen, von denen in Fig. 5 ein Paar gesondert dargestellt ist. Bei diesen Paaren handelt es sich um in der Fachwelt als Schraubensicherung unter der Bezeichnung Nord-Lock^{®}-Sicherungen bekannte Scheibenpaare. Wie in dem Dokument GB 2 136 077 A offenbart ist, bestehen diese Paare aus zwei gleichen Ringscheiben 25 aus Stahl, von denen in Fig. 6 eine einzelne Ringscheibe 25 gezeigt ist. An einer Seite, die in Fig. 6 oben liegend gezeigt ist, weisen diese Scheiben 25 in Umfangsrichtung flach ansteigende Keilflächen mit dazwischenliegenden, steilen Stirnflächen 29 (diese Flächen sind in Fig. 5 und 6 nur teilweise beziffert) auf, während an der gegenüberliegenden Seite eine Art Verzahnung ausgebildet ist, beispielsweise in Form radial verlaufender Rippen 31 (ebenfalls nur teilweise beziffert). Wie Fig. 5 zeigt, liegen die Scheiben 25 mit der Seite der Keilflächen 27 aneinander. Wie im Stand der Technik für Nord-Lock^{®}-Sicherungen bekannt ist, sind die Scheiben 25 vor dem Einbau mittels eines nachgiebigen, zähen Klebers aneinandergehalten, der jedoch eine Relativdrehung zulässt. Bei aneinanderliegenden Scheiben 25 ist jedoch entsprechend der Orientierung der Keilflächen 27 eine Drehung lediglich in einer Drehrichtung möglich, während die Drehung in entgegengesetzter Richtung gesperrt ist.

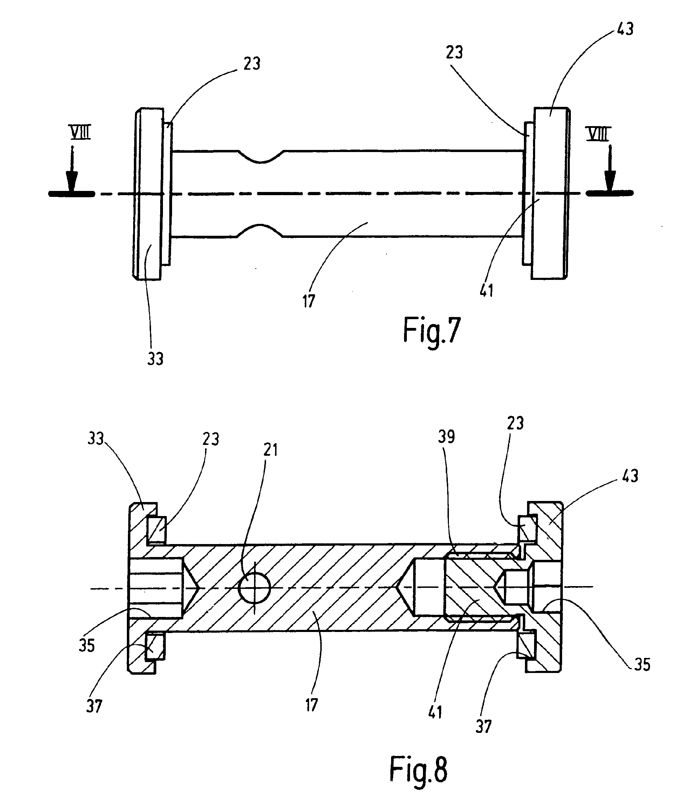

Die Fig. 4 und 7 bis 9 zeigen den Einbau zweier Paare der Keilsicherungsscheiben 23 als Drehsperre der erfindungsgemäßen Spanneinrichtung. Wie gezeigt, weist die Spannwelle 17 ein flanschartiges Kopfteil 33 auf, das in der Art eines Schraubenkopfes mit einem Innensechskant 35 versehen ist. Wie Fig. 8 am deutlichsten zeigt, ist an der Innenseite des Kopfteils 33 eine Ringnut 37 ausgebildet, die einen vertieften Sitz für ein auf der Spannwelle 17 sitzendes Paar Keilsicherungsscheiben 23 bildet. An dem dem Kopfteil 33 entgegengesetzten Ende weist die Spannwelle 17 eine koaxiale Gewindebohrung 39 auf, mit der eine Schraube 41 verschraubbar ist, deren Kopfteil 43, das beim gezeigten Beispiel den gleichen Durchmesser wie das Kopfteil 33 der Spannwelle 17 besitzt, ein Gegenhalteelement für eine Verschraubung bildet, mit der eine zwischen den Kopfteilen 33 und 43 wirksame Druckkraft erzeugbar ist. Das Kopfteil 43 der Schraube 41 weist, wie das Kopfteil 33 der Spannwelle 17, eine Ringnut 37 als Sitz für ein zweites Paar der Keilsicherungsscheiben 23 auf. Ebenfalls wie das Kopfteil 33 der Spannwelle 17 weist auch das Kopfteil 43 der Schraube 41 einen Innensechskant 35 auf.

Für einen Spannvorgang eines betreffenden Spannseiles 1 wird die Spannwelle 17 mittels des Innensechskants 35 am Kopfteil 33 in Aufwickel- oder Spannrichtung gedreht, während die Verschraubung mittels der Schraube 41 nicht festgezogen ist und die Keilsicherungsscheiben 23 die Relativdrehung der Ringscheiben 25 in der Aufwickelrichtung zulassen. Bei Erreichen der gewünschten Seilspannung wird die Verschraubung durch Festdrehen der Schraube 41 mittels des Innensechskants 35 festgezogen, so dass die an den Außenseiten der Paare der Keilsicherungsscheiben 23 befindlichen Rippen 31 durch Verpressen mit der Außenseite der Gehäusewand 45 (Fig. 4) des Profilstabs 13 in praktisch formschlüssigen Eingriff gelangen, wie dies ebenfalls bei der Innenseite der Ringnut 37 am jeweiligen Kopfteil 33 bzw. 43 der Fall ist. Gleichzeitig ergibt sich eine ebenfalls formschlüssige Sperrung zwischen den Ringscheiben 25 der Paare Keilsicherungsscheiben 23 an den Stirnflächen 29 der Keilflächen 27. Die beiden Keilsicherungsscheiben 23 sind am gegenüberliegenden Ende der Spannwelle 17 derart orientiert zueinander angeordnet, dass die Sperrung einmal im und einmal entgegen dem Uhrzeigersinn wirksam wird. Dergestalt ist sowohl in der einen Drehrichtung der Schraube 41 als auch in der gegenläufigen Drehrichtung der weiteren Schraube 33 die angestrebte Keilsicherung beim Festlegen der Einrichtung erreicht.

Um die vertikalen Ränder der jeweiligen Bahnen des Gitternetzes 5 an den Eckpfosten 3 festzulegen, sind an den Eckpfosten 3 an benachbarten Seitenwänden des Profilstabes 13 vertikal verlaufende Rundstäbe 47 vorgesehen, die durch die Maschen des betreffenden Gitternetzes 5 durchgefädelt sind. Die Stäbe 47 weisen verjüngte Endzapfen 49 auf, die in Haltewinkel 51 eingreifen, die mittels Schrauben 53 am Profilstab 13 angebracht sind. Wie Fig. 2 zeigt, sind über die Länge des Eckpfostens 3 an zwei Seiten des Profilstabs 13 jeweils drei Rundstäbe 47 über entsprechende Haltewinkel 51 angebracht.

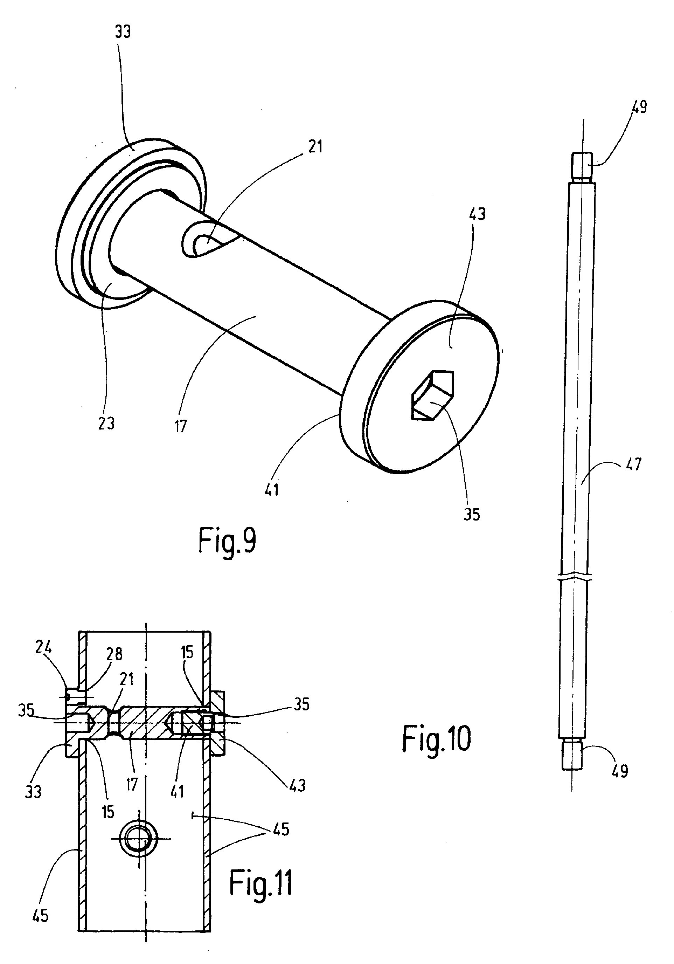

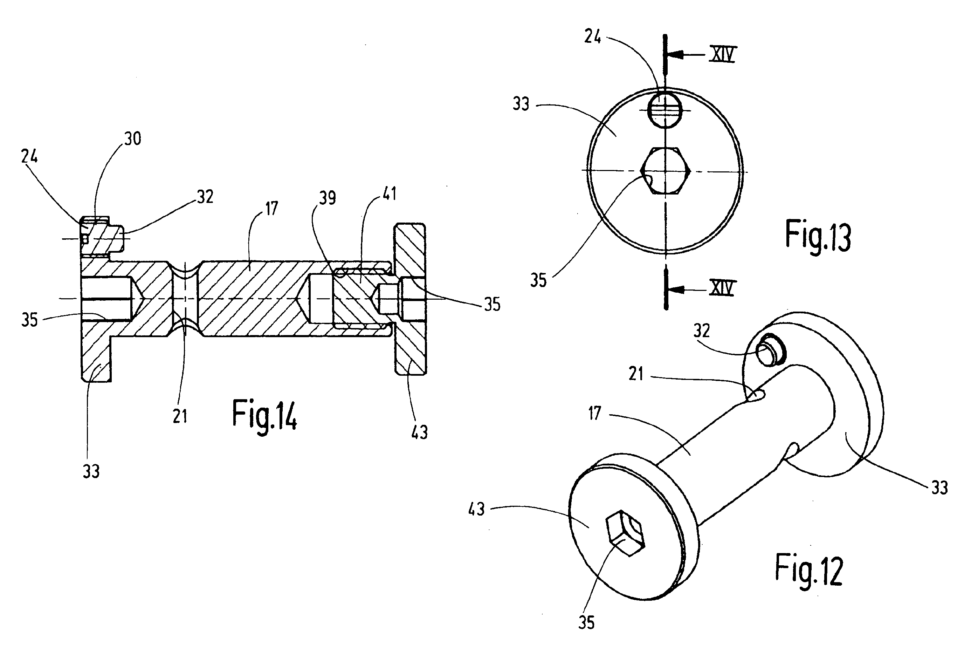

Fig. 11 bis 17 zeigen weitere Ausführungsbeispiele gemäß einem zweiten Aspekt der erfindungsgemäßen Einrichtung. Dabei ist die Drehsperre, ohne Benutzung von Keilsicherungsscheiben, durch eine formschlüssige Verriegelung mittels eines Sperrkörpers 24 verwirklicht, der am flanschartigen Kopfteil 33 der Wickelwelle 17 gehalten ist und im Abstand von der Drehachse zur Bildung einer formschlüssigen Verriegelung in eine Ausnehmung 28 der Gehäusewand 45 eingreift. Die Fig. 12 bis 14 zeigen ein Ausführungsbeispiel dieses Aspekts, bei dem als Sperrkörper eine Madenschraube 24 vorgesehen ist. Diese ist in eine Gewindebohrung 30 im Kopfteil 33 derart einschraubbar, dass bei mit der Außenseite des flanschartigen Kopfteils 33 bündiger Madenschraube 24, wie dies in Fig. 14 gezeigt ist, der Schaft der Madenschraube 24 einen axial vorstehenden Vorsprung 32 für den Eingriff in die Ausnehmung 28 der Gehäusewand 45 bildet. Zum Spannen wird die Spannwelle 17, wie oben beschrieben, mittels eines in einen Innensechskant 35 eingreifenden Drehwerkzeuges gespannt, bevor die Madenschraube 24 in die in Fig. 14 gezeigte Axialposition eingeschraubt wird, was nach Erreichen des Spannzustandes durchgeführt wird, um die Spannwelle 17 zu verriegeln.

Als Halteeinrichtung, die das Kopfteil 33 bei Erreichen des Spannzustandes in Anlage an der Gehäusewand 45 hält, ist ein dem Kopfteil 33 gegenüberliegendes zweites Kopfteil 43 vorgesehen, das eine dem Kopfteil 33 entsprechende flanschartige Erweiterung einer Schraube 41 bildet, die in eine koaxiale Gewindebohrung 39 am zugeordneten Ende der Spannwelle 17 einschraubbar ist. Wiederum ist ein Innensechskant 35 im Kopfteil 33 zur Drehbetätigung vorgesehen.

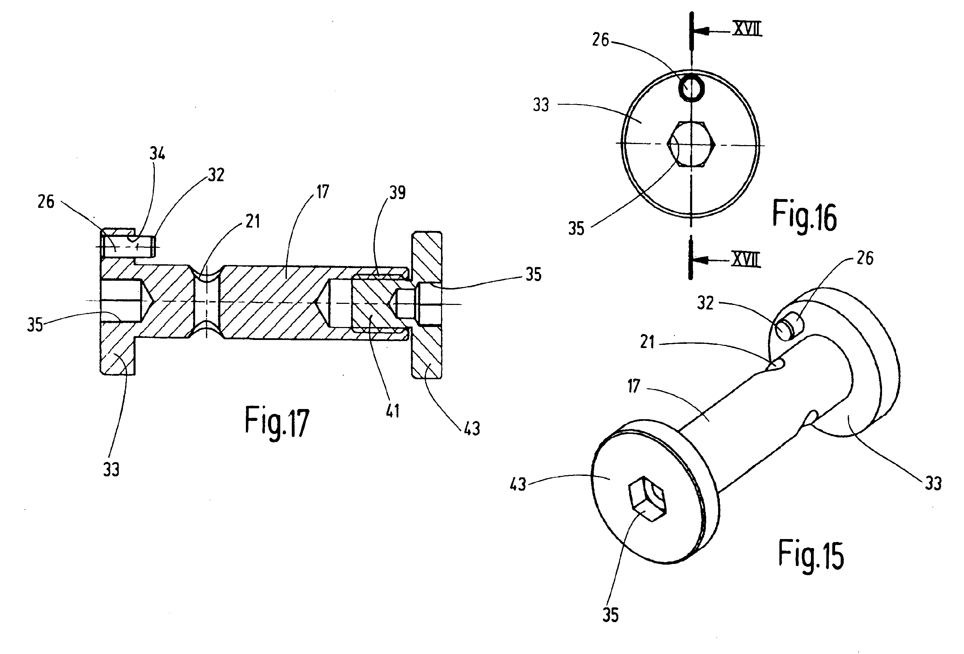

Die Fig.15 bis 17 zeigen ein weiteres Ausführungsbeispiel, das dem Beispiel von Fig. 12 bis 14 im Wesentlichen entspricht, abgesehen davon, dass der Sperrkörper durch einen zylindrischen Bolzen 26 gebildet ist. Dieser ist in eine Bohrung 34 derart einsetzbar, dass er, wenn er mit der Außenseite des Kopfteils 33 bündig ist, wiederum einen Vorsprung 32 für den formschlüssigen Eingriff in die Ausnehmung 28 der Gehäusewand 45 bildet.

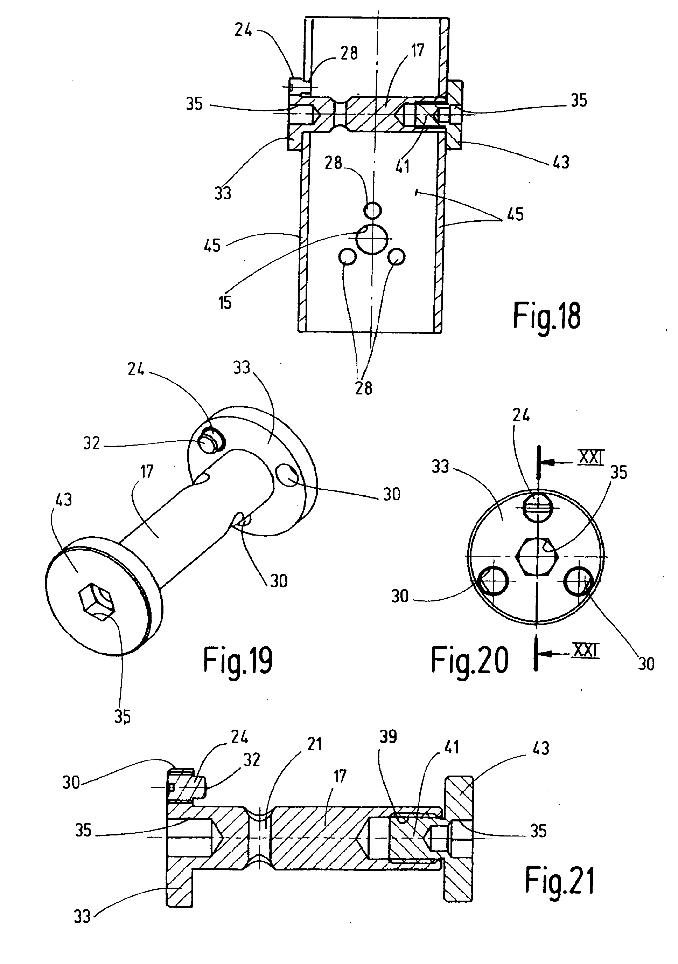

Die Fig. 18 bis 28 zeigen weitere Ausbildungen der Ausführungsformen von Fig. 12 bis 17, wobei der hauptsächliche Unterschied demgegenüber besteht, dass zur Ermöglichung einer Verriegelung der Spannwelle 17 in mehr als einer Drehposition mehr als eine Ausnehmung 28 in der Gehäusewand 45 und/oder mehrere Aufnahmen 30, 34 im Kopfteil 33 der Spannwelle 17 vorgesehen sein können.

Diesbezüglich zeigt die Fig. 18 drei Ausnehmungen 28, die auf einer die zugehörige Lagerbohrung 15 konzentrisch umgebenden Kreislinie in Winkelabständen von 120° zueinander angeordnet sind, um mit einem Vorsprung 32 eines Sperrkörpers in Riegeleingriff zu kommen. Bei der Darstellung von Fig. 18 ist hierfür eine Schraube 24 vorgesehen. Eine für dieses Beispiel vorgesehene Spanneinheit ist in Fig. 19 bis 21 näher dargestellt. Wie gezeigt ist die Schraube 24 als Madenschraube in der Gewindebohrung 30 im Kopfteil 33 der Spannwelle 17 aufgenommen. Um eine feine Abstufung der Drehpositionen zu ermöglichen, sind bei einem in Fig. 19 bis 21 gezeigten Beispiel im Kopfteil 33 drei Gewindebohrungen 30 ausgebildet, die für das Einsetzen der Schraube 24 ausgewählt werden können und auf einer Kreislinie im Winkel von 120° zueinander versetzt angeordnet sind, wobei der Radius der Kreislinie demjenigen der Kreislinie entspricht, auf der die Aufnahmen 28 an der Gehäusewand 45 angeordnet sind. Für eine gewünschte Drehposition kann daher sowohl eine Gewindebohrung 30 für die Schraube 24 am Kopfteil 33 der Spannwelle 17 als auch eine der Ausnehmungen 28 der Gehäusewand 45 ausgewählt werden.

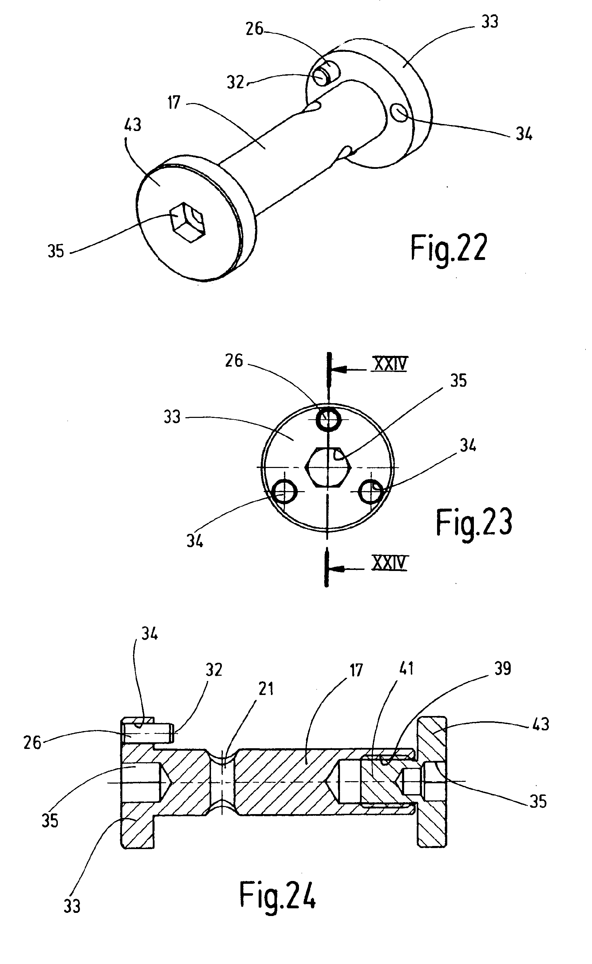

Die Fig. 22 bis 24 zeigen eine Spanneinheit, die dem Beispiel von Fig. 19 bis 21 entspricht, abgesehen davon, dass anstelle einer Schraube 24 ein Bolzen 26 in eine Bohrung 34 im Kopfteil 33 der Spannwelle 17 einsetzbar ist. Wiederum sind drei entsprechend versetzte Bohrungen 34 für einen Bolzen 26 vorgesehen.

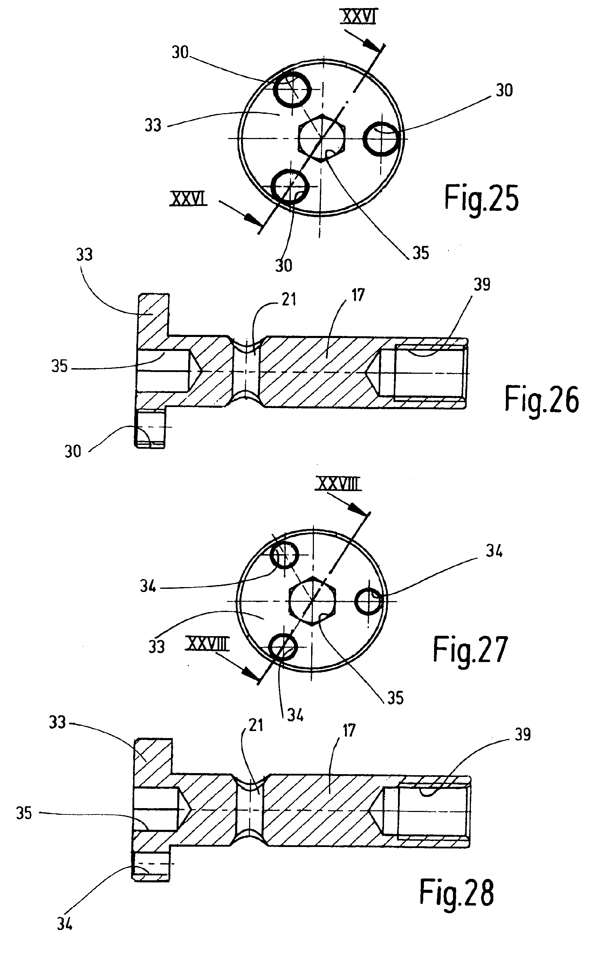

Die Fig. 25 und 26 zeigen die Spannwelle 17 mit drei im Kopfteil 33 befindlichen Gewindebohrungen 30, jedoch ohne eingesetzte, als Sperrkörper dienende Schraube. Während bei den zuvor beschriebenen Beispielen beim Spannvorgang die Schraube 41 der Halteeinrichtung erst festziehbar ist, nachdem der Eingriff eines Sperrkörpers in eine Ausnehmung 28 der Gehäusewand 45 hergestellt ist, können bei dem Beispiel von Fig. 25 und 26 das Kopfteil 43 der Spannschraube 41 und damit das Kopfteil 33 an die Gehäusewand 45 angelegt sein und die Spannwelle 17 zum Spannen gedreht werden, um am Ende des Spannvorgangs die Fluchtung des Sperrkörpers mit einer Ausnehmung 28 der Gehäusewand 45 herzustellen. Sodann kann der Sperrkörper von außen her eingesetzt werden, durch Einschrauben in eine Gewindebohrung 30 im Kopfteil 33, worauf die Spannschraube 41 festgezogen wird.

Die Fig. 27 und 28 zeigen ein den Fig. 24 und 26 entsprechendes Beispiel, wobei jedoch anstelle der Gewindebohrungen 30 im Kopfteil 33 glatte Bohrungen 34, wiederum im Winkel von 120° zueinander versetzt, angeordnet sind. Anstelle einer Schraube 24 ist in diesem Fall ein Bolzen 26 von außen her zur Bildung der Verriegelung einsetzbar.

## Patentansprüche

1. Einrichtung zum Spannen von Strangelementen, insbesondere von Seilen (1) oder Drähten bei netz- oder gitterartigen Umzäunungen (5), mit einem Gehäuse (13) mit zwei einander gegenüberliegenden Gehäusewänden (45), in denen auf einer gemeinsamen Achse jeweils eine Lagerbohrung (15) für eine für einen Wickelvorgang drehbare Spannwelle (17) gebildet ist, und mit einer die Drehung der Spannwelle (17) in Abwickelrichtung verhindernden Drehsperre (23), **dadurch gekennzeichnet, dass** die Drehsperre zumindest ein Paar Keilsicherungsscheiben (23) aufweist, das zwischen einem mit der Spannwelle (17) verbundenen Teil (33) und der Gehäusewand (45) angeordnet ist, und dass eine Verschraubung (39, 41) zum Erzeugen einer Druckkraft vorgesehen ist, die das Paar der Keilsicherungsscheiben (23) zwischen Gehäusewand (45) und dem mit der Spannwelle (17) verbundenen Teil (33) verpresst.

2. Einrichtung nach Anspruch 1, **dadurch gekennzeichnet, dass** das mit der Spannwelle (17) verbundene Teil durch ein an der Spannwelle (17) selbst befindliches, flanschartiges Kopfteil (33) derselben gebildet ist.

3. Einrichtung nach Anspruch 1 oder 2, **dadurch gekennzeichnet, dass** das Kopfteil (33) einen Innensechskant (35) für eine Drehbetätigung aufweist.

4. Einrichtung nach einem der vorstehenden Ansprüche, **dadurch gekennzeichnet, dass** das dem Kopfteil (33) gegenüberliegende Ende der Spannwelle (17) zur Bildung der Verschraubung eine koaxiale Bohrung (39) mit Innengewinde aufweist, mit dem eine ein zweites, flanschartiges Kopfteil (43) aufweisende Schraube (41) verschraubbar ist, zwischen deren Kopf (43) und der Außenseite der Gehäusewand (45) ein zweites Paar Keilsicherungsscheiben (23) angeordnet ist.

5. Einrichtung nach einem der vorstehenden Ansprüche, **dadurch gekennzeichnet, dass** die Kopfteile (33, 43) von Spannwelle (17) und Schraube (41) je eine vertiefte Ringnut (37) als Sitz für das zugeordnete Paar der Keilsicherungsscheiben (23) aufweisen.

6. Einrichtung zum Spannen von Strangelementen, insbesondere von Seilen (1) oder Drähten bei netz- oder gitterartigen Umzäunungen (5), mit einem Gehäuse (13) mit zwei einander gegenüberliegenden Gehäusewänden (45), in denen auf einer gemeinsamen Achse jeweils eine Lagerbohrung (15) für eine für einen Wickelvorgang drehbare Spannwelle (17) gebildet ist, und mit einer die Drehung der Spannwelle (17) in Abwickelrichtung verhindernden Drehsperre (24, 26, 28), **dadurch gekennzeichnet, dass** die Spannwelle (17) ein flanschartig erweitertes Kopfteil (33) aufweist, das mittels eines Haltemittels (41, 43) an der Außenseite der zugeordneten Gehäusewand (45) anliegend gehalten ist, und dass die Drehsperre mindestens einen Sperrkörper (24, 26) aufweist, der in eine im Kopfteil (33) befindliche Aufnahme (30, 34) derart einsetzbar ist, dass er mit einem axial vorstehenden Vorsprung (32) in eine in der Gehäusewand (45) befindliche Ausnehmung (28) zur Bildung einer formschlüssigen Verriegelung eingreift.

7. Einrichtung nach Anspruch 6, **dadurch gekennzeichnet, dass** am Kopfteil (33) auf einer zur Achse der Spannwelle (17) konzentrischen Kreislinie mehr als eine Aufnahme (30, 34) für einen Sperrkörper (24, 26) gebildet ist.

8. Einrichtung nach Anspruch 6 oder 7, **dadurch gekennzeichnet, dass** in der Gehäusewand (45) auf einer Kreislinie, die zur Lagerbohrung (15) für die Spannwelle (17) konzentrisch ist, mehr als eine Ausnehmung (28) für einen Sperrkörper (24, 26) gebildet sind.

9. Einrichtung nach einem der Ansprüche 6 bis 8, **dadurch gekennzeichnet, dass** als Sperrkörper zumindest eine in eine Gewindebohrung (30) des Kopfteils (33) einbringbare Schraube vorgesehen ist.

10. Einrichtung nach einem der Ansprüche 6 bis 8, **dadurch gekennzeichnet, dass** als Sperrkörper zumindest ein in eine Bohrung (34) des Kopfteils (33) einsetzbarer Bolzen (26) vorgesehen ist.

11. Einrichtung nach einem der Ansprüche 6 bis 10, **dadurch gekennzeichnet, dass** als Haltemittel eine Schraube (41) vorgesehen ist, die in eine koaxiale Gewindebohrung (39) in dem dem Kopfteil (33) gegenüberliegenden Ende der Spannwelle (17) einschraubbar ist und ein zweites, flanschartig erweitertes Kopfteil (43) aufweist, das an der Außenseite der zugeordneten Gehäusewand (45) anliegt.

12. Einrichtung nach einem der Ansprüche 6 bis 11, **dadurch gekennzeichnet, dass** das Gehäuse durch einen einen Pfosten (3) einer Umzäunung (5) bildenden Profilstab (13) gebildet ist.

13. Einrichtung nach einem der Ansprüche 6 bis 12, **dadurch gekennzeichnet, dass** das Gehäuse durch einen geschlossenen Rechteckprofilstab (13) gebildet ist.

14. Einrichtung nach einem der Ansprüche 6 bis 13, **dadurch gekennzeichnet, dass** bei einem Gehäuse in Form eines Eckpfostens (3) zum Spannen von Seilen (1) in zueinander in einem Winkel verlaufenden Spannrichtungen jeweils ein Paar Lagerbohrungen (15) in einander paarweise gegenüberliegenden Gehäusewänden (45) für eine einer jeweiligen Spannrichtung zugeordnete Spannwelle (17) ausgebildet sind.
